# EUROPEAN PATENT APPLICATION

(11) **EP 4 006 672 A1**
(43) Date of publication of application: **01.06.2022**
(21) Application number: 21209495.7
(22) Date of filing: 22.11.2021
(51) Int. Cl.: G05B 19/418, B29C 64/386, G06Q 10/04, G06Q 30/06, G05B 19/4099

(54) **MANAGEMENT SYSTEM AND MANAGEMENT APPARATUS**

(30) Priority: 26.11.2020 JP 2020196346; 14.10.2021 JP 2021168786
(71) Applicant: Ricoh Company, Ltd., Tokyo 143-8555 (JP)
(72) Inventor: NAGATSUKA, Shingo, Tokyo, 143-8555 (JP); SHINDOH, Hidenori, Tokyo, 143-8555 (JP)
(74) Representative: SSM Sandmair

(57) **Abstract**

At least a three-dimensional printer (33) configured to model a modeled object and a terminal (32) configured to issue a request for modeling of a modeled object are connected in a management system. The management system includes a free space detection unit (51) and a transmission unit (53). The free space detection unit (51) is configured to detect a free space in a three-dimensional printer chamber (1), based on a reservation for modeling of a modeled object. The transmission unit (53) is configured to transmit, to the terminal (32), an offer for modeling of a modeled object capable of being modeled in the free space in the three-dimensional printer chamber (1).

## Description

### BACKGROUND OF THE INVENTION

### 1. Field of the Invention

The present invention relates to a management system and a management apparatus.

### 2. Description of the Related Art

In recent years, in the additive manufacturing (AM) market, a three-dimensional printer output service is performed in which a modeled object for which modeling has been ordered by a customer is manufactured by a three-dimensional printer and delivered to the customer. An order entry service as described above has been performed as a printing service even in a two-dimensional printing market. In the printing service in the two-dimensional printing market, an order is entered and the printing service is provided in accordance with vacancy of a printer.

For example, Japanese Unexamined Patent Application Publication No. 2002-297952 discloses a printer operation management system that allows a terminal on an applicant side to view offer information that is based on vacancy of a printer, in order to improve order entry efficiency in the printing service.

However, even if an order entry mode for accepting an order based on the vacancy of the printer of the printing service in the two-dimensional printing market is adopted as it is to the three-dimensional printer output service, order entry efficiency may be reduced, which is a problem.

Specifically, a three-dimensional modeled object has a volume that occupies a space. Therefore, in the three-dimensional printer output service, the order entry efficiency is reduced unless an order is accepted while taking into account the volume of the modeled object in addition to vacancy of a three-dimensional printer.

The present invention has been conceived in view of the foregoing situations, and an object of the present invention is to provide a management system and a management apparatus that are able to improve order entry efficiency in a three-dimensional printer output service.

### SUMMARY OF THE INVENTION

According to an aspect of the present invention, at least a three-dimensional printer configured to model a modeled object and a terminal configured to issue a request for modeling of a modeled object are connected in a management system. The management system includes a free space detection unit and a transmission unit. The free space detection unit is configured to detect a free space in a three-dimensional printer chamber, based on a reservation for modeling of a modeled object. The transmission unit is configured to transmit, to the terminal, an offer for modeling of a modeled object capable of being modeled in the free space in the three-dimensional printer chamber.

According to an aspect of the present invention, it is possible to improve order entry efficiency of a three-dimensional printer output service.

### BRIEF DESCRIPTION OF THE DRAWINGS

FIG. 1 is a diagram for explaining an order entry mode of a three-dimensional printer of a powder bed system;
FIG. 2 is a diagram for explaining a free space formed in a three-dimensional printer chamber;
FIG. 3 is a diagram illustrating a system configuration of a management system of a first embodiment;
FIG. 4 is a block diagram illustrating hardware configurations of a management server and an operator terminal of the management system of the first embodiment;
FIG. 5 is a functional block diagram of the management server;
FIG. 6A is a flowchart illustrating system operation for modeling a modeled object, for which an order is entered by a customer, in the management system of the first embodiment;
FIG. 6B is a flowchart illustrating the flow of a spot offer process that is performed when cancel occurs with respect to a quotation result;
FIG. 7 is a sequence diagram of a normal offer process at Step S1 in the flowchart in FIG. 6A;
FIG. 8 is a diagram illustrating an example of a reservation screen for three-dimensional printers;
FIG. 9 is a sequence diagram of a spot offer process at Step S4 in the flowchart in FIG. 6A;
FIG. 10 is a diagram illustrating modeling reservation data and spot offer data;
FIG. 11 is a sequence diagram of a modeling process at Step S6 in the flowchart in FIG. 6A;
FIG. 12 is a flowchart illustrating a first half of a process of updating a maximum free space in a three-dimensional printer chamber at Step S22 in the sequence diagram in FIG. 7;
FIG. 13 is a flowchart illustrating a second half of the process of updating the maximum free space in the three-dimensional printer chamber at Step S22 in the sequence diagram in FIG. 7;
FIG. 14 is a diagram for explaining how to select candidate reference coordinates in the three-dimensional printer chamber;
FIG. 15 is a diagram for explaining how vertices of a free bounding box are defined;
FIG. 16 is a diagram for explaining operation of calculating the free bounding box on an XY plane;
FIG. 17 is a diagram for explaining a process of enlarging an outer periphery of the free bounding box in a Z direction;
FIG. 18 is a diagram for explaining a process of reducing the free bounding box on the XY plane;
FIG. 19 is a diagram illustrating a state in which a vertex of the free bounding box is located just above or just below reference coordinates;
FIG. 20 is a functional block diagram of a management server and an operator terminal according to a second embodiment;
FIG. 21 is a sequence diagram of a normal offer process according to the second embodiment;
FIG. 22 is a diagram illustrating examples of a relationship between a free space in a three-dimensional printer chamber and modeled objects;
FIG. 23 is a diagram illustrating an example of quotation result registration screen data;
FIG. 24 is a diagram illustrating an example of quotation result data;
FIG. 25 is a flowchart illustrating system operation for modeling a modeled object, for which an order is entered by a customer, in a management system of a third embodiment;
FIG. 26 is a diagram illustrating how to manage operation progress of the three-dimensional printer;
FIG. 27 is a sequence diagram of a modeling process at Step S6 in the flowchart in FIG. 25;
FIG. 28 is a diagram illustrating an example of modeling of a modeled object by the three-dimensional printer;
FIG. 29 is a diagram illustrating an example of modeling of a modeled object by the three-dimensional printer; and
FIG. 30 is a diagram illustrating an example of modeling of a modeled object by the three-dimensional printer.

The accompanying drawings are intended to depict exemplary embodiments of the present invention and should not be interpreted to limit the scope thereof. Identical or similar reference numerals designate identical or similar components throughout the various drawings.

### DESCRIPTION OF THE EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

An embodiment of the present invention will be described in detail below with reference to the drawings.

Embodiments of a management system will be described below with reference to the accompanying drawings.

### First Embodiment

### Overview

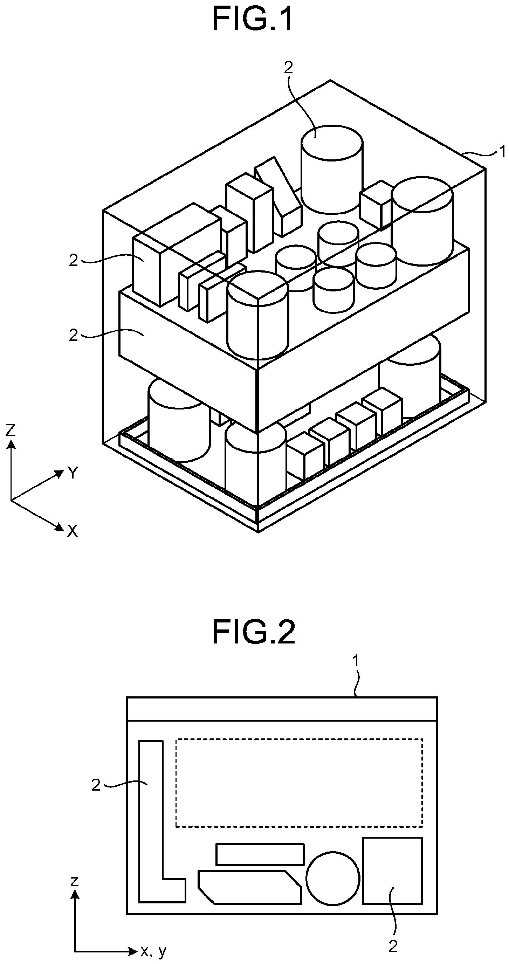

For example, in a three-dimensional printer output service that provides a modeled object using a three-dimensional printer of a powder bed system, as illustrated in FIG. 1, orders for modeling models 2 are accepted such that the modeling models 2 are densely arranged in a three-dimensional printer chamber 1. Densely arranging the modeling models 2 in the three-dimensional printer chamber 1 without generating a wasted space as much as possible indicates that orders are accepted efficiently.

However, as illustrated in FIG. 2, if it is difficult to densely arrange the ordered modeling models 2 in the three-dimensional printer chamber, a space that is not filled with the modeling models 2 is generated as indicated by a dotted line in the figure. Consumption of a modeling material and a modeling time for the space as described above do not directly increase sales performance of the three-dimensional printer output service. In view of the above, in the three-dimensional printer output service, order entry efficiency decreases unless order entry is performed so as to prevent a wasted space from being generated in the three-dimensional printer chamber 1.

In view of the above, the management system of the embodiment generates offer information for accepting an order for a modeled object with a certain size and a certain shape that can be added, on the basis of a status of reservations for arrangement of modeled objects in the three-dimensional printer chamber 1. Accordingly, it is possible to fill a free space in the three-dimensional printer chamber 1 with a modeled object having a certain size and a certain shape corresponding to the free space in the three-dimensional printer chamber 1, so that it is possible to improve the order entry efficiency of the three-dimensional printer output service.

### System configuration

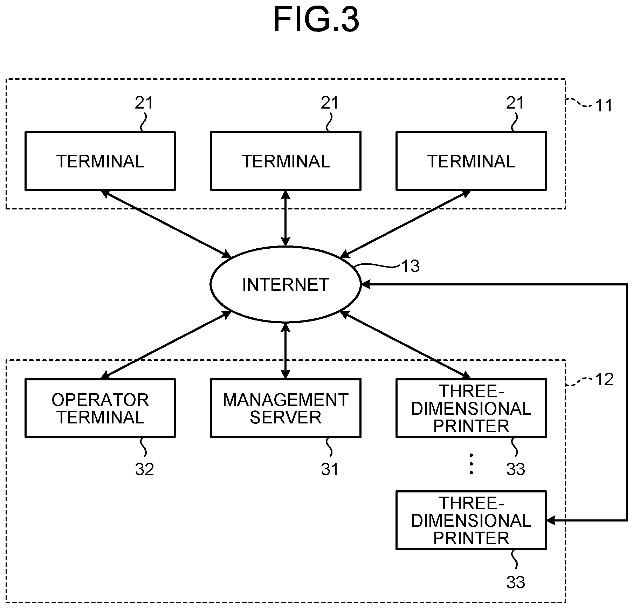

FIG. 3 is a diagram illustrating a system configuration of the management system of the first embodiment. As illustrated in FIG. 3, the management system of the present embodiment is constructed by connecting an apparatus 11 (one example of a request apparatus group) on a customer side, on which requests for the three-dimensional printer output service are issued by terminals 21, to an apparatus 12 (one example of a modeling apparatus group) on an operator side, on which the three-dimensional printer output service is implemented by three-dimensional printers or the like, via a predetermined network.

As the network, for example, a predetermined network, such as a wide area network or a private network, may be used. Hereinafter, as one example, it is assumed that the apparatus 11 on the customer side of the three-dimensional printer output service and the apparatus 12 on the operator side of the three-dimensional printer output service are connected to each other via Internet 13 that is one example of a wide area network.

The apparatus 11 on the customer side of the three-dimensional printer output service includes the terminals 21 of a plurality of customers. The number of the terminals 21 may be one or plural. Each of the terminals 21 includes, similarly to a general computer apparatus, a main body, a display (display unit), and an input operation function, such as a keyboard. The main body includes a central processing unit (CPU), a read only memory (ROM), a random access memory (RAM), an input/output interface (I/O), and the like. Further, a storage unit, such as a ROM, stores therein an application program of a Web browser (browser software).

The apparatus 12 on the operator side of the three-dimensional printer output service includes a management server 31 (one example of a management apparatus), an operator terminal 32, and three-dimensional printers 33. The number of each of the management server 31 to the three-dimensional printer 33 may be one or a plural. Further, it may be possible to provide the plurality of management servers 31 for the purpose of load distribution.

By connecting the terminals 21 and the three-dimensional printers 33, it is possible to share spaces in which no reservation for the three-dimensional printers 33 is made and effectively use the spaces. In addition, customers need not own the three-dimensional printers 33, but is allowed to use the three-dimensional printers 33 only when needed.

### Hardware configurations of management server and operator terminal

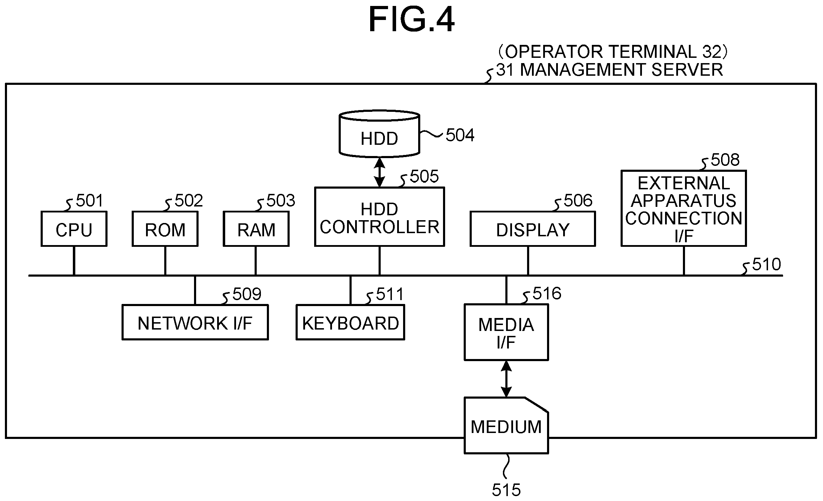

FIG. 4 is a diagram illustrating a hardware configuration of the management server 31. Meanwhile, the operator terminal 32 has the same hardware configuration as illustrated in FIG. 4, and therefore, description of the hardware configuration of the management server 31 is referred to for the operator terminal 32.

As illustrated in FIG. 4, the management server 31 has the same configuration as a personal computer apparatus, and includes a CPU 501, a ROM 502, and a RAM 503. Further, a server apparatus 10 includes a hard disk drive (HDD) 504, an HDD controller 505, a display 506, an external apparatus connection interface (I/F) 508, a network I/F 509, a bus line 510, a keyboard 511, and a media I/F 516.

The CPU 501 controls entire operation of the management server 31. The ROM 502 stores therein a program, such as an IPL, for driving the CPU 501. The RAM 503 is used as a work area for the CPU 501. The HDD 504 stores therein various kinds of data, such as a program. The HDD controller 505 controls write and read of various kinds of data with respect to the HDD 504 under the control of the CPU 501. The display 506 displays various kinds of information, such as a cursor, a menu, a window, or an image.

Specifically, a storage unit, such as the ROM 502, of the management server 31 stores therein a program for reading, from a database or a file server, information corresponding to requests that are received from the terminals 21 and the operator terminal 32, performing processing on the information to obtain viewable information, such as image information, and making a response. Further, the storage unit of the management server 31 also stores therein a program for computer aided design (CAD) used as a library. Furthermore, the storage unit of the management server 31 stores therein an offer program for giving, to the terminals 21, a normal offer, which is a modeling offer without limitation on a modeling condition for a modeled object, and a spot offer, which is a conditional modeling offer for filling a free space when the free space is generated in the three-dimensional printer chamber 1 due to the normal offer.

In contrast, a storage unit, such as the ROM 502, of the operator terminal 32 stores therein an application program for a Web browser, a program for CAD for arranging modeling models in the three-dimensional printer chamber 1, a driver program for causing the three-dimensional printer to perform a modeling job, and the like. Furthermore, processes may be automated by using the programs as described above (the application program for the Web browser, the program for CAD, the driver program, and the like).

The external apparatus connection I/F 508 is an interface for connecting to various external apparatuses, such as a universal serial bus (USB) memory or a printer apparatus. The network I/F 509 is an interface for performing data communication using a communication network 100. The bus line 510 is an address bus line, a data bus line, or the like for electrically connecting each of the structural elements, such as the CPU 501.

Furthermore, the keyboard 511 includes a plurality of keys and inputs characters, values, various instructions, and the like. A pointing device 512 performs input operation, such as selection and execution of various instructions, selection of a processing target, or movement of a cursor. The media I/F 516 controls write (storage) or read of data with respect to a recording medium 515, such as a flash memory.

### Functional configuration of management server

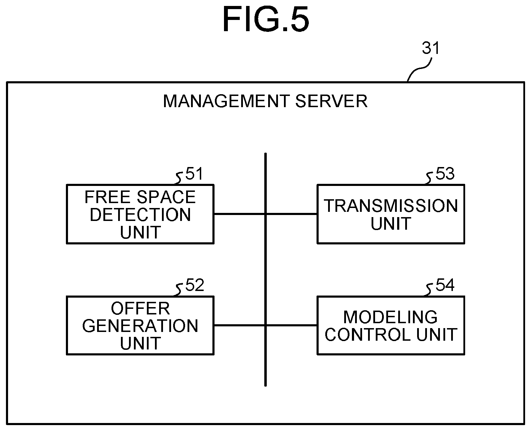

FIG. 5 is a functional block diagram illustrating functions that are implemented by causing the CPU 501 of the management server 31 to execute the offer program stored in the storage unit, such as the ROM 502. As illustrated in FIG. 5, the management server 31 includes a free space detection unit 51, an offer generation unit 52, a transmission unit 53, and a modeling control unit 54, all of which are implemented by executing the offer program.

Meanwhile, the free space detection unit 51, the offer generation unit 52, the transmission unit 53, and the modeling control unit 54 are implemented by software using the offer program. However, a part or all of the units as described above may be implemented by hardware, such as an integrated circuit (IC).

Furthermore, the offer program may be provided by being recorded in a computer readable recording medium, such as a compact disk-ROM (CD-ROM) or a flexible disk (FD), in a computer-installable or computer-executable file format. Moreover, the offer program may be provided by being recorded in a computer readable recording medium, such as a CD-recordable (CD-R), a digital versatile disk (DVD), a Blu-ray (registered trademark) disk, or a semiconductor memory. Furthermore, the offer program may be provided by being downloaded via a network, such as the Internet. Moreover, the offer program may be provided by being incorporated in a ROM or the like in the apparatus in advance.

The free space detection unit 51 detects a free space in the three-dimensional printer chamber 1 in which a modeled object is modeled by the three-dimensional printer, on the basis of reservations that are made by the terminals 21 for modeling of modeled objects.

The offer generation unit 52 generates a spot offer that is a modeling offer for a modeled object that can be modeled in the free space in the three-dimensional printer chamber 1 and that is a modeling offer with a predetermined limitation. Here, the predetermined limitation is a limitation on a modeling size, a modeling material, and the like. Furthermore, the offer generation unit 52 generates a normal offer that is a modeling offer for which no limitation is imposed.

The transmission unit 53 transmits the normal offer and the spot offer to the terminals 21. The modeling control unit 54 performs modeling control of causing the three-dimensional printers 33 to perform modeling including modeled objects for which modeling reservations are made in response to the normal offer and the spot offer.

Each of the three-dimensional printers 33 performs modeling of a modeled object in accordance with a modeling job that is received from the operator terminal 32. The three-dimensional printer 33 may be owned by a party who has received orders from customers, may be owned by a cooperating party who cooperates with the three-dimensional printer output service, or may be owned by individuals.

The Internet 13 intermediates communication between the terminals 21 and the management server 31, communication between the operator terminal 32 and the management server 31, and communication between the operator terminal 32 and the three-dimensional printers 33.

### Modeling process

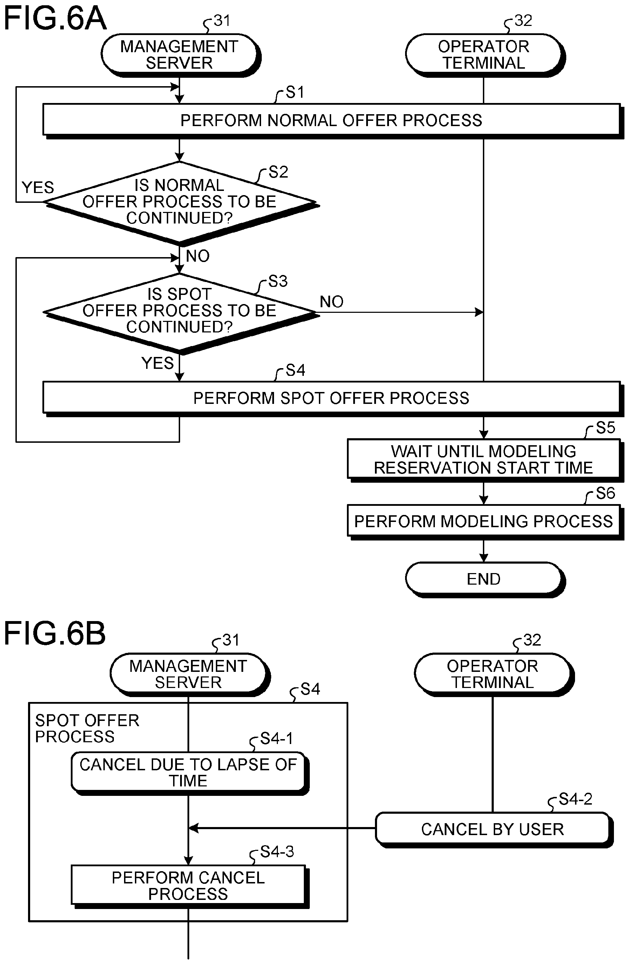

FIG. 6A is a flowchart illustrating system operation for performing a process of giving an offer to customers and a process of modeling a modeled object for which an order is entered by a customer in the management system of the first embodiment. The flowchart in FIG. 6A indicates the system operation corresponding to a single modeling reservation. In general, a plurality of modeling reservations are made. Therefore, in reality, the operation illustrated in the flowchart in FIG. 6A is performed in parallel for all of the modeling reservations.

In the flowchart in FIG. 6A, first, at Step S1, the management server 31 performs a "normal offer process", in which no limitation is imposed on a modeling size, a modeling material, and the like, for a customer. At Step S1, the operator terminal 32 receives a quotation request from the customer, and makes a reservation for arrangement of a modeling model in the three-dimensional printer chamber 1 of the three-dimensional printer 33.

Subsequently, at Step S2, the management server 31 determines whether to continue the normal offer process on the basis of a condition a and a condition b as described below.

The condition a is that a free region of a target modeling reservation is equal to or larger than a defined value x.

The condition b is that a defined time y or longer remains before a reservation time of the target modeling reservation.

The management server 31 may determine whether to continue the normal offer process by using only the condition a, or may determine whether to continue the normal offer process by using only the condition b. Further, the management server 31 may determine that the normal offer process is continued when both of the condition a and the condition b are met, or may determine that the normal offer process is continued when one of the condition a and the condition b is met.

Meanwhile, it is assumed that the management server 31 automatically determines whether to continue the normal offer process on the basis of the condition a and the condition b. However, this is one example, and an operator of a provider of the three-dimensional printer output service may determine whether to continue or terminate the normal offer process, may give a notice to the management server 31, and may cause the management server 31 to continue or terminate the normal offer process.

If the management server 31 does not continue the normal offer process (NO at Step S2), the process goes to Step S3.

In contrast, if the management server 31 continues the normal offer process (YES at Step S2), the process returns to the normal offer process at Step S1.

Subsequently, at Step S3, the free space detection unit 51 determines whether the management server 31 performs a "spot offer process", which is an offer with a limitation on the modeling size, the modeling material, and the like, and whether the management server 31 continues the spot offer, on the basis of a condition A and a condition B below.

The condition A is that a free region of a target modeling reservation in the three-dimensional printer chamber 1 is equal to or larger than a defined value X.

The condition B is that a defined time Y or longer remains before a reservation time (modeling start time or deliver time) of the target modeling reservation in the three-dimensional printer chamber 1.

The management server 31 may determine whether to perform or continue the spot offer process by using only the condition A, or may determine whether to perform or continue the spot offer process by using only the condition B. Further, the management server 31 may determine that the spot offer process is performed or continued when both of the condition A and the condition B are met, or may determine that the spot offer process is performed or continued when one of the condition A and the condition B is met.

Meanwhile, it is assumed that the management server 31 automatically determines whether to continue the spot offer process on the basis of the condition A and the condition B. However, this is one example, and it may be possible for an operator of the provider of the three-dimensional printer output service to determine whether to perform or continue the spot offer process, may give a notice to the management server 31, and may cause the management server 31 to perform or continue the spot offer process.

Subsequently, at Step S4, the management server 31 performs the "spot offer process" with a limitation on the modeling size, the modeling material, and the like for the customer. Specifically, the offer generation unit 52 generates offer information that is provided with the spot offer, on the basis of a determination result obtained at Step S3. Then, the spot offer is transmitted to the terminals 21 via the transmission unit 53. At Step S4, the operator terminal 32 receives a quotation request from the customer, and makes a reservation for arrangement of a modeling model in the three-dimensional printer chamber 1 of the three-dimensional printer 33. Through the spot offer process as described above, it is possible to accept a modeling reservation for a modeled object that can fill the space in the three-dimensional printer chamber 1.

Here, a case will be described in which, in the spot offer process, cancel occurs due to an order deadline, a lapse of a predetermined time, or order cancel with respect to the quotation result.

FIG. 6B is a flowchart illustrating the flow of the spot offer process that is performed when cancel occurs with respect to the quotation result. As illustrated in FIG. 6B, when cancel occurs due to an order deadline or a lapse of a predetermined time during the spot offer (Step S4-1), or when cancel occurs due to order cancel made by the operator terminal 32 (Step S4-2), the management server 31 performs a cancel process (Step S4-3). As the cancel process, the management server 31 returns to the same state as a state that was present before registration of spot offer data (deletes modeling reservation data and updates a maximum free space again).

Subsequently, if the management server 31 does not continue the spot offer process (NO at Step S3), the management server 31 gives a spot offer process termination notice indicating that the spot offer process is to be terminated to the operator terminal 32. At Step S5, the operator terminal 32 waits until a current time reaches a modeling reservation start time. At Step S6, the operator terminal 32 causes, by the modeling control unit 54, the three-dimensional printer 33 to start to perform modeling of the modeled object when the current time reaches the modeling reservation start time. Accordingly, the entire process in the flowchart in FIG. 6A is completed.

In the management system of the embodiment as described above, a modeling reservation for a modeled object that can fill the space in the three-dimensional printer chamber 1 is accepted by performing the spot offer process. Therefore, it is possible to fill the space in the three-dimensional printer chamber 1 with the modeled object having a certain size and a certain shape corresponding to the free space in the three-dimensional printer chamber 1, so that it is possible to improve order entry efficiency of the three-dimensional printer output service.

### Details of process at each of Steps

Processes at each of Steps in the flowchart in FIG. 6A will be described in detail below.

### Normal offer process

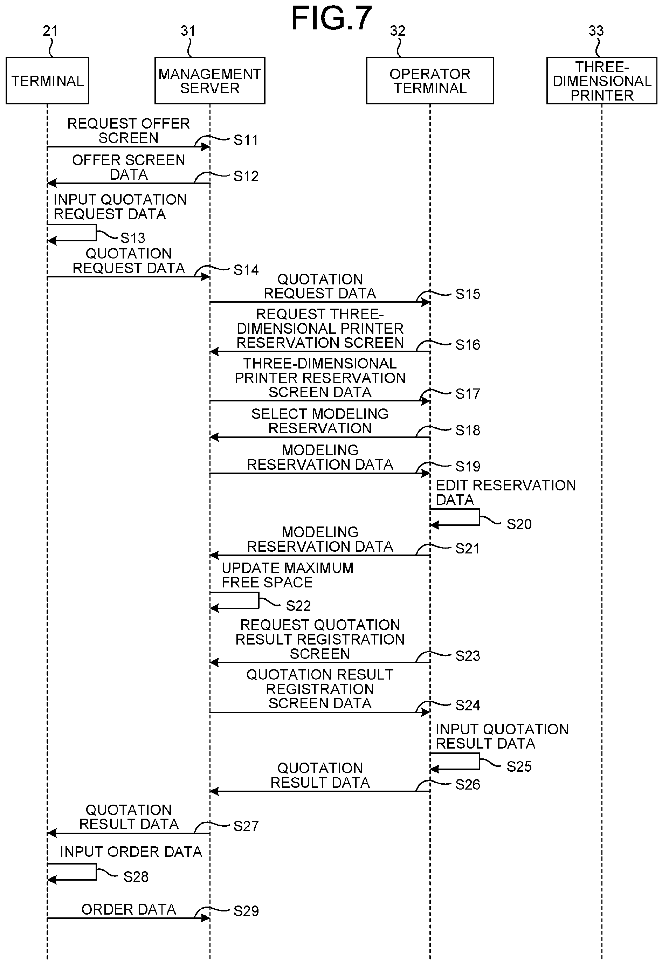

FIG. 7 is a sequence diagram of the normal offer process at Step S1 in the flowchart in FIG. 6A. In FIG. 7, first, the customer accesses a modeling offer site for a modeled object, which is published by the management server 31, via the terminal 21 (Step S11). Accordingly, the management server 31 transmits offer screen data to the terminal 21 (Step S12).

The customer views, by a Web browser, an offer screen that is displayed on the terminal 21, registers a modeling model and a modeling material (or a purpose instead) for which modeling is desired, and issues a request for quotation to the management server 31 (Step S13 and Step S14). Quotation request data corresponding to the request for quotation is transferred to the operator terminal 32 via the management server 31 (Step S14 and Step S15).

The operator checks, via the operator terminal 32, details of the request for quotation based on the quotation request data transmitted from the terminal 21 (Step S15).

Further, the operator acquires and views a reservation screen of the three-dimensional printer 33 from the management server 31 via the operator terminal 32 (Step S16 and Step S17). Furthermore, the operator selects a modeling reservation for producing the modeling model for which quotation is requested by the customer, for the management server 31 via the operator terminal 32 (Step S18). At this time, the operator may generate a new modeling reservation via the operator terminal 32, instead of the existing modeling reservation on the reservation screen.

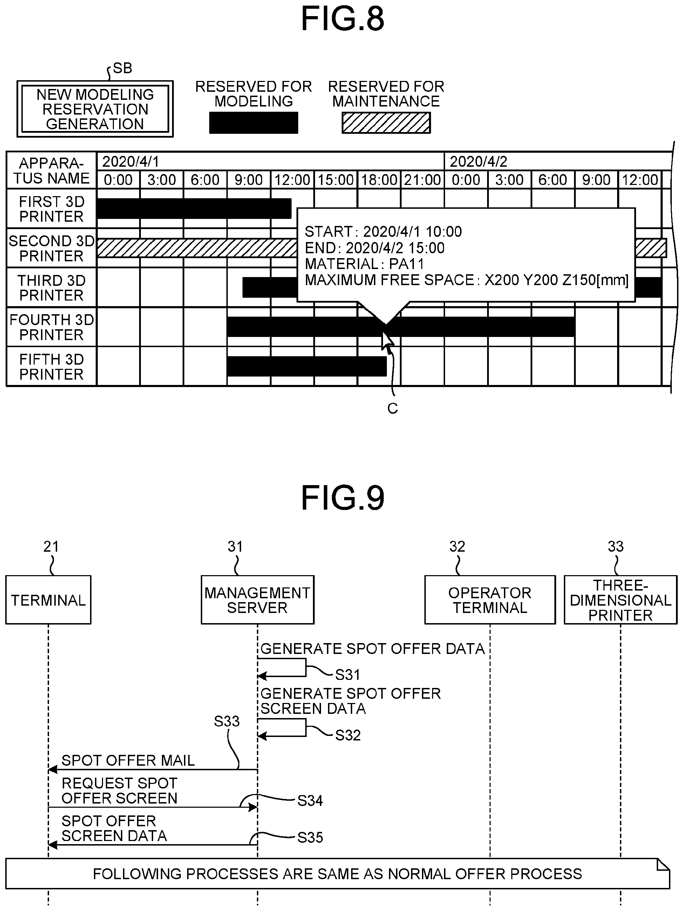

FIG. 8 illustrates an example of the reservation screen of the three-dimensional printer 33. On the reservation screen of the three-dimensional printer 33, a modeling reservation and a maintenance reservation are displayed as a time chart, for each of the three-dimensional printers 33 that are managed by the provider of the three-dimensional printer output service. In FIG. 8, black bands represent time periods (modeling time (start time and end time) that are reserved for modeling. Further, a band with a diagonal line from upper right to lower left indicates a time period that is reserved for maintenance (time period that is not reserved for modeling).

In the reservation screen as described above, if a certain point on the black bands that are bands representing modeling reservations is pointed by a cursor C, the operator terminal 32 displays, in a pop-up manner, a modeling time, a modeling material, and a maximum free space. The operator determines a modeling reservation to which the requested modeling model is to be added, on the basis of the time chart in the reservation screen as described above. If the requested modeling model is not to be added to the existing modeling reservation, the operator operates a new modeling reservation generation button SB, and specifies generation of a new modeling reservation. Then, the operator adds the requested modeling model to the newly-generated modeling reservation.

Subsequently, the operator acquires the modeling reservation data from the management server 31 via the operator terminal 32 (Step S19). The modeling reservation data includes various kinds of data, such as an apparatus name, a modeling time (modeling start time and modeling end time), a modeling material, CAD data (arrangement data of the modeling model in the three-dimensional printer chamber 1), and a maximum free space.

Subsequently, the operator edits the CAD data included in the modeling reservation data, transmits the CAD data to the management server 31 via the operator terminal 32 (Step S20 and Step S21), and additionally arranges, in the three-dimensional printer chamber 1, the modeling model for which the quotation has been requested. Meanwhile, if the new modeling reservation is generated at Step S18, the operator specifies an apparatus name of the three-dimensional printer 33, the modeling time, and the modeling material, for the management server 31 via the operator terminal 32.

Subsequently, the management server 31 performs a process of updating a maximum free space in the three-dimensional printer chamber 1, on the basis of the modeling reservation data received from the operator terminal 32 (Step S22). Meanwhile, the operator may perform a process of inputting update of the maximum free space at Step S20, and transmit the modeling reservation data including the input of update to the management server 31, to thereby update the maximum free space on the management server 31 side.

Subsequently, the operator acquires a quotation result registration screen from the management server 31 via the operator terminal 32 (Step S23 and Step S24), and performs a process of inputting a quotation result in the quotation result registration screen (Step S25). Quotation result data of the quotation result input by the operator is transmitted to the terminal 21 via the management server 31 (Step S26 and Step S27).

The customer checks the quotation result via the terminal 21, inputs order data when accepting the quotation result (Step S28), and enters an order for modeling of the modeled object to the management server 31 (Step S29).

### Spot offer process

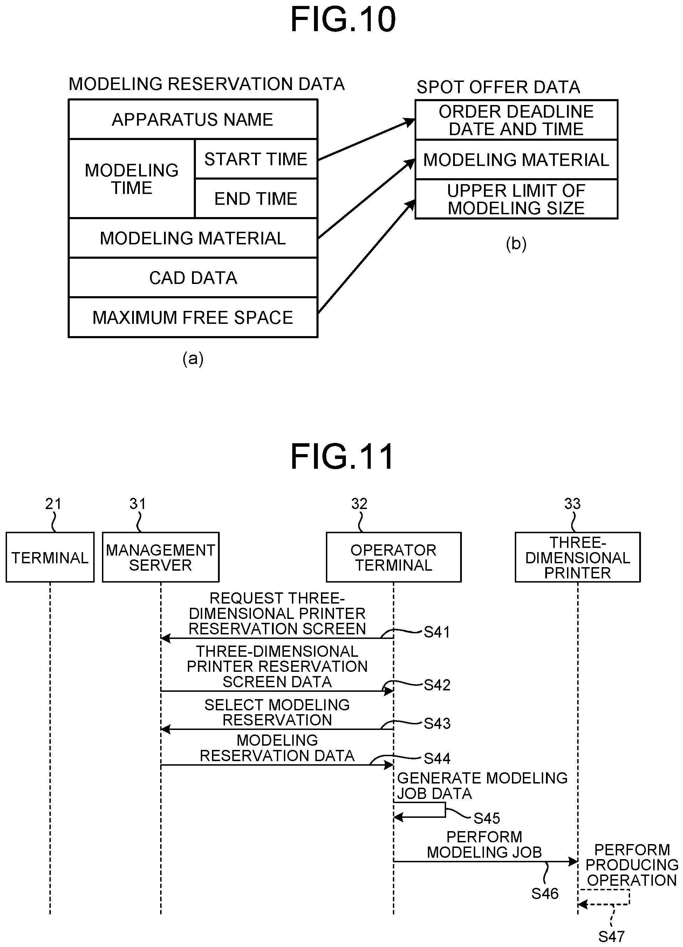

FIG. 9 is a sequence diagram of the spot offer process at Step S4 in the flowchart in FIG. 6A. In FIG. 9, first, the management server 31 generates spot offer data, as the offer information, on the basis of the modeling reservation data (Step S31). For example, the spot offer data with a limitation, such as an order deadline date and time, an upper limit of a modeling size, and a limitation on a modeling material, as illustrated at (b) in FIG. 10 is generated on the basis of the modeling reservation data that includes various kinds of data, such as the apparatus name, the modeling time (modeling start time and modeling end time), the modeling material, and the CAD data (arrangement data of the modeling model in the three-dimensional printer chamber 1) as illustrated at (a) in FIG. 10.

Subsequently, the management server 31 generates spot offer screen data that is published to customers, on the basis of the spot offer data (Step S32). Then, the management server 31 generates a spot offer mail for giving a notice of a spot offer, and transmits the spot offer mail to the terminal 21 of each of the customers (Step S33). Meanwhile, the customers to which the spot offer mail is to be transmitted may be selected from all of customers who have used the three-dimensional printer output service, customers who have used the three-dimensional printer output service last several months, or customers who have ordered modeling materials.

Among the customers who have received the spot offer mail as described above, a user who is able to enter an order that meets conditions, such as the order deadline date and time, the upper limit of the modeling size, and the modeling material, issues a request to the management server 31 to acquire the spot offer screen via the terminal 21 (Step S34). Then, the user operates the terminal 21 to input necessary information, such as a modeling size and a modeling material, on a modeled object for which modeling is requested to the acquired spot offer screen (Step S35), and issues the request for quotation as described at Step S13 and Step S14 in FIG. 7.

Accordingly, as described at Step S15 to Step S29 in FIG. 7, the management server 31 and the operator terminal 32 notifies the customer of the quotation result. The user checks the quotation result via a customer terminal, and enters an order for modeling of the modeled object corresponding to the spot offer when accepting the quotation result.

### Modeling process

FIG. 11 is a sequence diagram of the modeling process at Step S6 in the flowchart in FIG. 6A. In FIG. 11, at Step S41 and Step S42, the operator terminal 32 monitors a modeling reservation that is made on each of the three-dimensional printer 33, on the basis of a three-dimensional printer reservation screen acquired from the management server 31. Then, the operator terminal 32 acquires, from the management server 31, modeling reservation data corresponding to the modeling reservation for which the modeling start time has come (Step S43 and Step S44).

The operator terminal 32 generates a modeling job to be executed by the three-dimensional printer 33, on the basis of the CAD data or the like that is included in the modeling reservation data acquired from the management server 31 (Step S45), and transmits the modeling job to the three-dimensional printer 33 (Step S46). Accordingly, the three-dimensional printer 33 performs modeling of the modeled object (Step S47).

### Process of updating maximum free space

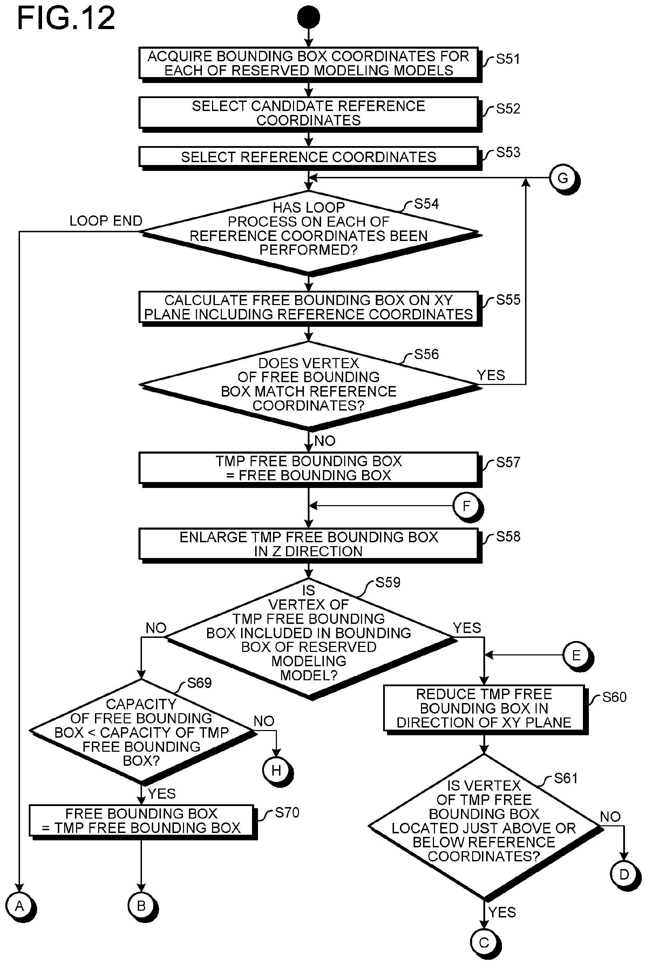

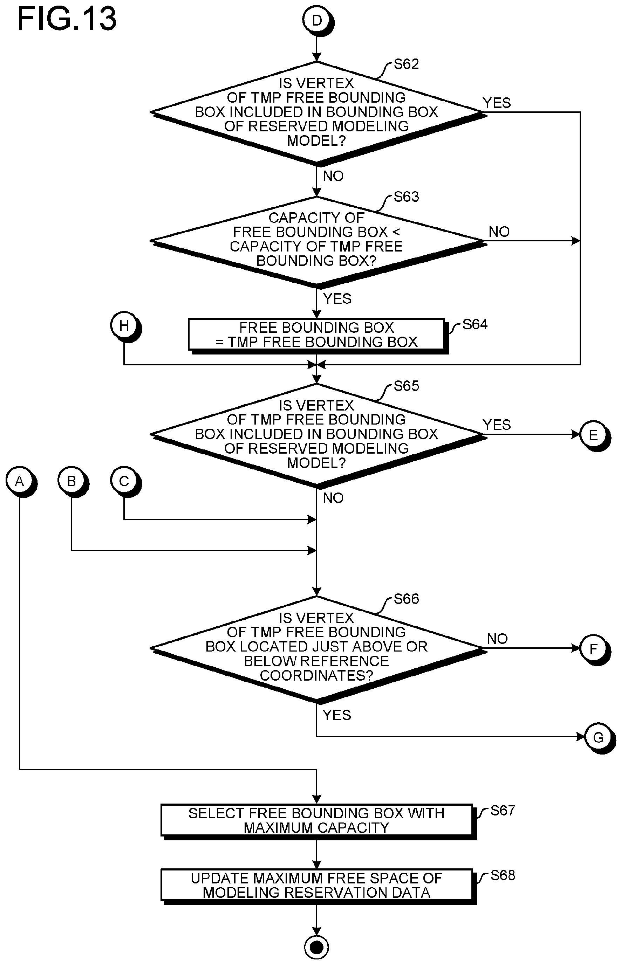

FIG. 12 and FIG. 13 are flowcharts of the process of updating the maximum free space in the three-dimensional printer chamber 1 at Step S22 in the sequence diagram in FIG. 7. FIG. 12 is a flowchart of a first half of the process of updating the maximum free space, and FIG. 13 is a flowchart of a second half of the process of updating the maximum free space.

First, in the flowchart in FIG. 12, the management server 31 acquires bounding box coordinates for each of modeling models (hereinafter, referred to as reserved modeling models) for which arrangement in the three-dimensional printer chamber 1 is reserved in the CAD data (Step S51). A bounding box is a minimum box that can enclose the reserved modeling model with a maximum size. The bounding box coordinates are detectable by using general CAD software.

Furthermore, the management server 31 assumes that each of outer frames (six faces) of a space in the three-dimensional printer chamber 1 covers a virtual reserved modeling model, and acquires bounding box coordinates of the outer frames.

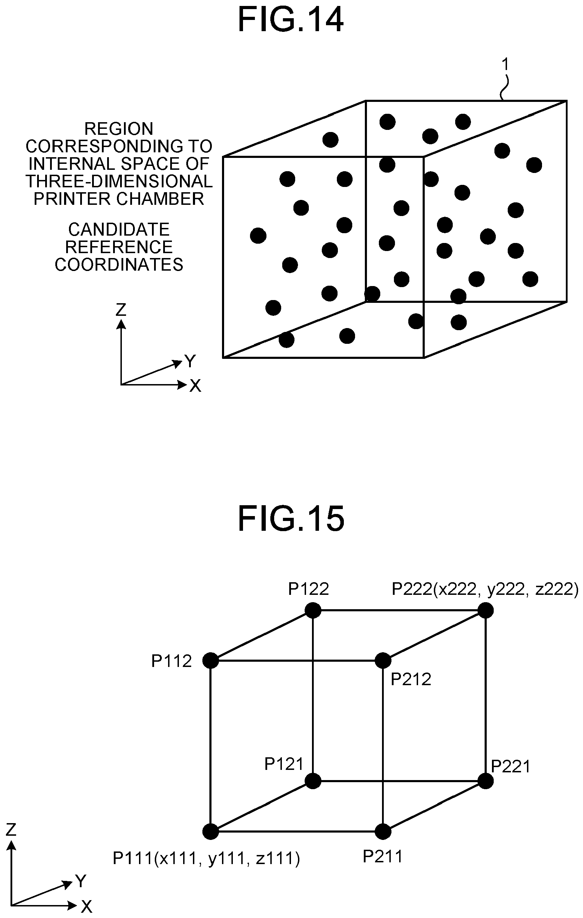

Subsequently, in the coordinate system in which a three-dimensional space corresponding to an internal space of the three-dimensional printer chamber 1 is divided in a grid-like manner as illustrated in FIG. 14, the management server 31 randomly selects a plurality of coordinates corresponding to the internal space of the three-dimensional printer chamber 1, and adopts the coordinates as candidate reference coordinates (Step S52). Black circles in the three-dimensional printer chamber 1 in FIG. 14 represent examples of the candidate reference coordinates. Further, reference coordinates indicate central coordinates of a "free bounding box" that is a box enclosing a region in which a modeling model is not arranged. Meanwhile, it may be possible to adopt, as the candidate reference coordinates, coordinates that are selected at predetermined intervals from among all of the coordinates in the three-dimensional printer chamber 1.

Subsequently, the management server 31 extracts only coordinates that are not included in the bounding boxes of all of the reserved modeling models among the candidate reference coordinates, and adopt the selected coordinates as the reference coordinates (Step S53). Specifically, the management server 31 defines vertices (P111, PI 12, P121, P122, P211, P212, P221, and P222) of a free bounding box as illustrated in FIG. 15, and eliminates the candidate reference coordinates that meet all of conditions below because the coordinates that meet the conditions are included in the free bounding box.
x111 < X coordinate of candidate reference < x222
y111 < Y coordinate of candidate reference < x222
z111 < Z coordinate of candidate reference < z222

The management server 31 repeatedly performs each of processes from Step S55 to Step S66 to be described below with respect to each of the reference coordinates selected at Step S53, and forms a plurality of free bounding boxes that serve as selection candidates for a free bounding box with a maximum space (Step S54).

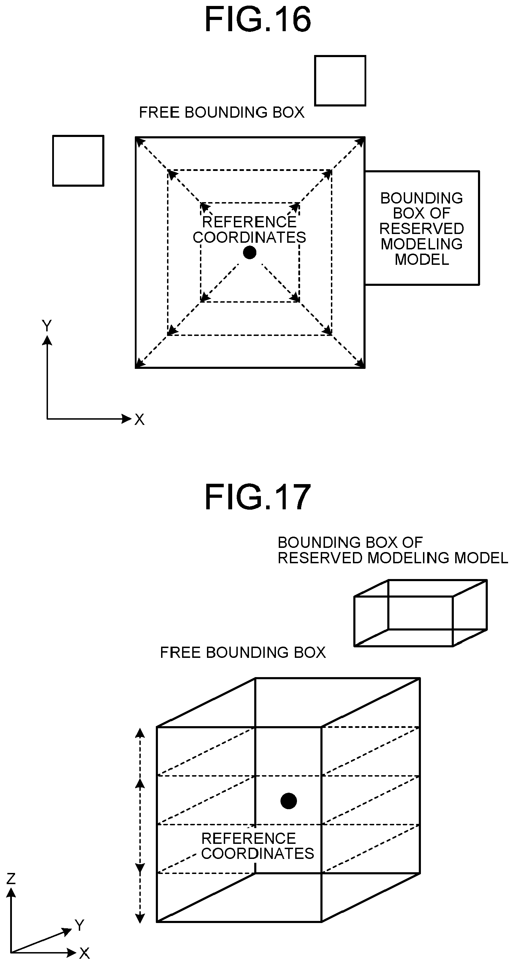

Specifically, at Step S55, the management server 31 calculates the free bounding box on the XY plane including the reference coordinates. FIG. 16 is a schematic diagram for explaining operation of calculating the free bounding box. As illustrated in FIG. 16, the management server 31 enlarges an outer circumference of a free bounding pox at regular intervals along the XY plane by using the reference coordinates as a center until any part of the outer circumference of the free bounding box comes into contact with the bounding box of the reserved modeling model. Then, when each of the coordinates on the outer circumference of the free bounding box is included in the bounding box of the reserved modeling model, the management server 31 determines that the free bounding box comes into contact with the bounding box of the reserved modeling model.

Meanwhile, as the process of enlarging the outer circumference of the free bounding box, enlargement processes on the the X-axis and the Y-axis may simultaneously be performed or the enlargement processes on the X-axis and the Y-axis may be performed one by one.

Subsequently, when the process of enlarging the free bounding box is performed on the XY plane including the reference coordinates as described above, and if the reference coordinates are adjacent to the bounding box of the reserved modeling model, it is difficult to enlarge the free bounding box. If the management server 31 detects that a vertex of the free bounding box matches the reference coordinates (YES at Step S56), the management server 31 determines that the reference coordinates are adjacent to the bounding box of the reserved modeling model, and the process returns to Step S54.

In contrast, if the management server 31 does not detect that a vertex of the free bounding box matches the reference coordinates (NO at Step S56), the management server 31 adopts, as the free bounding box, a temporary free bounding box (TMP free bounding box) that includes the reference coordinates and that are calculated at Step S55, and performs a process of updating the free bounding box (Step S57). However, if a capacity of the free bounding box is reduced through the update process, the process of updating the free bounding box is skipped (the update process is not performed).

Subsequently, the management server 31 performs a process of enlarging an outer circumference of the TMP free bounding box at regular intervals in the Z direction as illustrated in FIG. 17 until the outer circumference of the TMP free bounding box comes into contact with any of the reserved modeling models (Step S58). Then, the management server 31 determines whether a vertex of the TMP free bounding box comes into contact with the bounding box of the reserved modeling model by enlarging the outer circumference of the TMP free bounding box (Step S59).

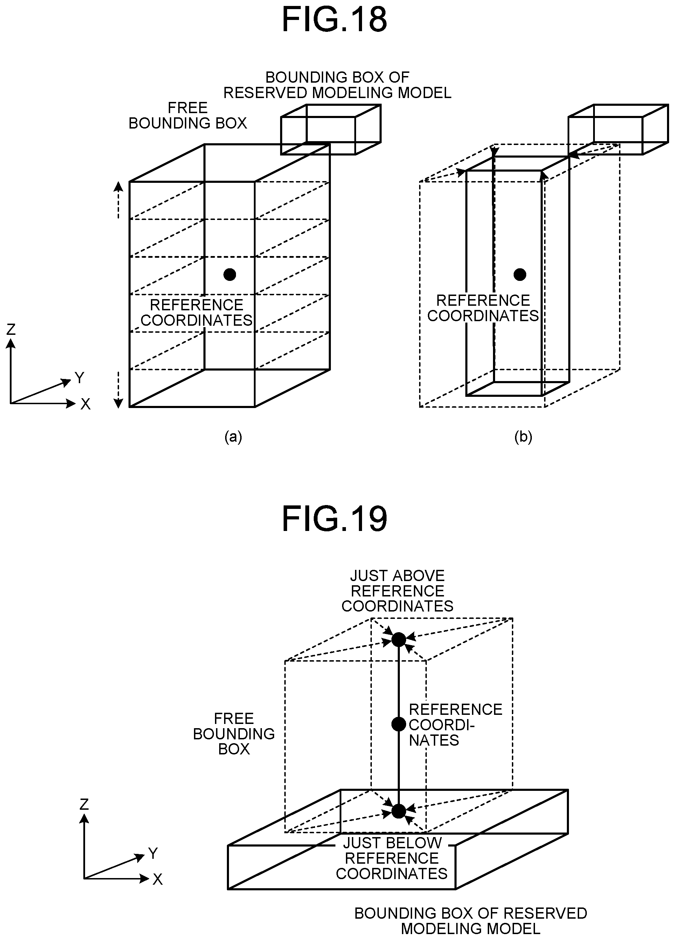

If the outer circumference of the TMP free bounding box comes into contact with any of the bounding boxes of the reserved modeling models as illustrated at (a) in FIG. 18 by performing the process of enlarging the outer circumference of the free bounding box in the Z direction (YES at Step S59), the management server 31 performs a process of reducing the outer circumference of the TMP free bounding box in a direction of the XY plane as illustrated at (b) in FIG. 18 (Step S60).

Subsequently, the management server 31 determines whether a vertex of the TMP free bounding box is located just above or just below the reference coordinates as illustrated in FIG. 19 by performing the process of reducing the outer circumference of the free bounding box in the direction of the XY plane (Step S61).

If the vertex of the TMP free bounding box is located just above or just below the reference coordinates by performing the process of reducing the outer circumference of the free bounding box in the direction of the XY plane (YES at Step S61), the management server 31 returns the process to Step S58 illustrated in FIG. 12 through Step S66 illustrated in FIG. 13, and proceeds to calculation of a free bounding box for next reference coordinates.

In contrast, if the vertex of the TMP free bounding box is not located just above or just below the reference coordinates by performing the process of reducing the outer circumference of the free bounding box in the direction of the XY plane (NO at Step S61), the management server 31 proceeds to the process at Step S62 in the flowchart in FIG. 13.

At Step S62, the management server 31 determines whether the vertex of the TMP free bounding box comes into contact with (is included in) the bounding box of the reserved modeling model. If it is determined that the vertex of the TMP free bounding box comes into contact with (is included in) the bounding box of the reserved modeling model (YES at Step S62), the process returns to Step S60 in the flowchart in FIG. 12 through Step S65, and the process of reducing the TMP free bounding box is performed.

In contrast, if it is determined that the vertex of the TMP free bounding box does not come into contact with (is not included in) the bounding box of the reserved modeling model (NO at Step S62), the management server 31 determines whether a capacity of the TMP free bounding box is larger than a capacity of the free bounding box (Step S63).

If the capacity of the TMP free bounding box is smaller than the capacity of the free bounding box (NO at Step S63), the management server 31 returns the process to Step S60 in the flowchart in FIG. 12 through Step S65, and performs the process of reducing the TMP free bounding box.

In contrast, if the capacity of the TMP free bounding box is larger than the capacity of the free bounding box (YES at Step S63), the management server 31 adopts the TMP free bounding box as the free bounding box, performs the process of updating the free bounding box (Step S64), and proceeds to the process at Step S66 through Step S65.

In contrast, at Step S59, if it is determined that the vertex of the TMP free bounding box subjected to the enlargement process does not come into contact with (is not included in) the bounding box of the reserved modeling model (NO at Step S59), the management server 31 proceeds to the process at Step S69. At Step S69, the management server 31 determines whether the capacity of the TMP free bounding box is larger than the capacity of the free bounding box.

If the capacity of the TMP free bounding box is smaller than the capacity of the free bounding box (NO at Step S69), the management server 31 proceeds to the process at Step S60 through Step S65 in the flowchart in FIG. 13, and performs the process of reducing the TMP free bounding box.

In contrast, if the capacity of the TMP free bounding box is larger than the capacity of the free bounding box (YES at Step S69), the management server 31 adopts the TMP free bounding box as the free bounding box, performs the process of updating the free bounding box (Step S70), and proceeds to the process at Step S66 in the flowchart in FIG. 13.

The management server 31 repeats operation of performing the process of updating the free bounding box while performing the process of enlarging or reducing the TMP free bounding box as described above until it is determined that, at Step S66, the vertex of the TMP free bounding box is located just above or just below the reference coordinates (see FIG. 19).

In other words, if the management server 31 determines, at Step S66, that the vertex of the TMP free bounding box is located just above or just below the reference coordinates, the management server 31 exits a loop process from Step S55 to Step S66, Step S69, and Step S70 in the flowcharts in FIG. 12 and FIG. 13, and proceeds to Step S67 in the flowchart in FIG. 13.

Subsequently, if it is determined that, at Step S66, the vertex of the TMP free bounding box is located just above or just below the reference coordinates, the free bounding box that is lastly subjected to the update process at Step S70 or Step S64 has a maximum free space with respect to the reference coordinates. Therefore, when determining that the vertex of the TMP free bounding box is located just above or just below the reference coordinates, the management server 31 selects a free bounding box with a larger capacity between the free bounding boxes that are lastly subjected to the update processes at Step S70 and Step S64 (Step S67). Then, the management server 31 adopts the selected free bounding box with a larger capacity as a maximum free space of the modeling reservation data (Step S68). Accordingly, the process of updating the maximum free space illustrated in the flowcharts in FIG. 12 and FIG. 13 is terminated.

### Effects of embodiment

As is clear from the description above, the management system of the present embodiment performs the spot offer process for accepting an order for a modeled object that takes a certain modeling time and that has a certain size and a certain shape that can be added, on the basis of a status of reservations for arrangement of modeled objects in the three-dimensional printer chamber 1. In other words, the management system of the present embodiment performs, while the three-dimensional printer is performing modeling, a spot offer in accordance with a free space in which additional modeling can be performed, with respect to the free space in the three-dimensional printer chamber 1, updates the free space in which additional modeling can be performed, transmits spot offer data to the terminal 21, and adds modeling data. With this configuration, it is possible to fill the free space in the three-dimensional printer chamber 1 with a modeled object that takes a certain modeling time and that has a certain size and a certain shape corresponding to the free space in the three-dimensional printer chamber 1. Therefore, it is possible to improve order entry efficiency of the three-dimensional printer output service.

### Second Embodiment

A second embodiment will be described below.

The second embodiment is different from the first embodiment in that a unit price calculation unit that changes a unit price for improvement of order entry efficiency, in accordance with a result of an offer. In the description of the second embodiment below, explanation of the same components as those of the first embodiment will be omitted, and differences form the first embodiment will be described.

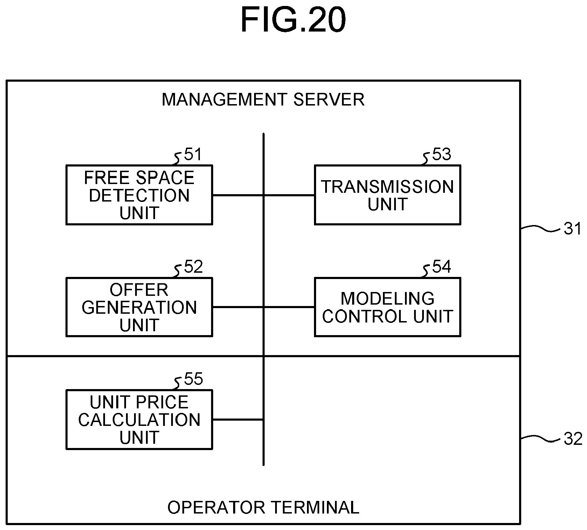

FIG. 20 is a functional block diagram of a management server 31 and an operator terminal 32 according to the second embodiment. As illustrated in FIG. 20, the operator terminal 32 includes a unit price calculation unit 55 that changes a unit price for improvement of order entry efficiency, in accordance with a result of an offer.

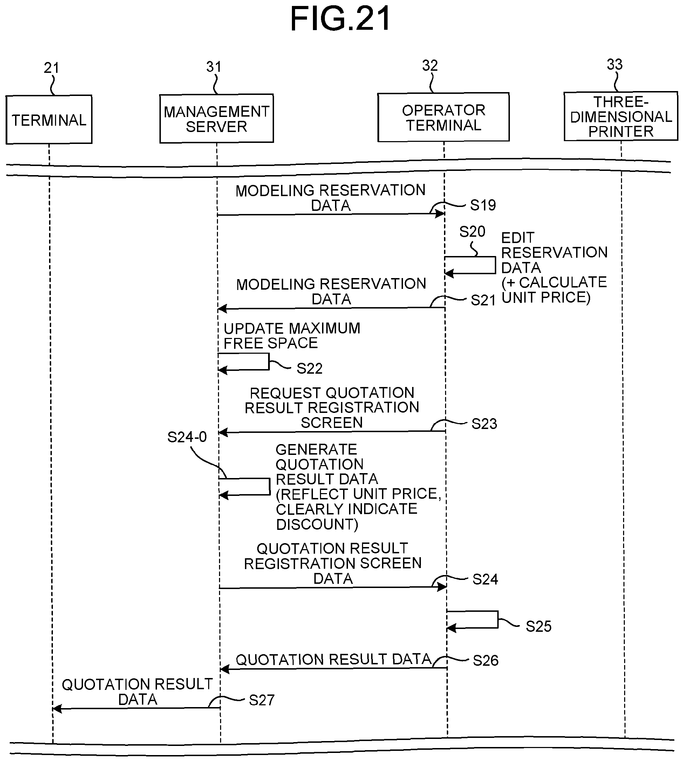

FIG. 21 is a sequence diagram of a normal offer process according to the second embodiment. As illustrated in FIG. 21, the sequence of the second embodiment is different from the sequence of the first embodiment illustrated in FIG. 7 in that a quotation that reflects a calculation result obtained by the unit price calculation unit 55 is made.

An operator acquires modeling reservation data from the management server 31 via the operator terminal 32 (Step S19).

Subsequently, when editing CAD data that is included in the modeling reservation data, the operator causes the unit price calculation unit 55 to determine a unit price on the basis of a current free space via the operator terminal 32 (Step S20).

Here, changing the unit price, in particular, reducing the unit price, at the time of making a quotation for modeling in accordance with a degree of occupancy of the free space in the three-dimensional printer chamber 1 will be described.

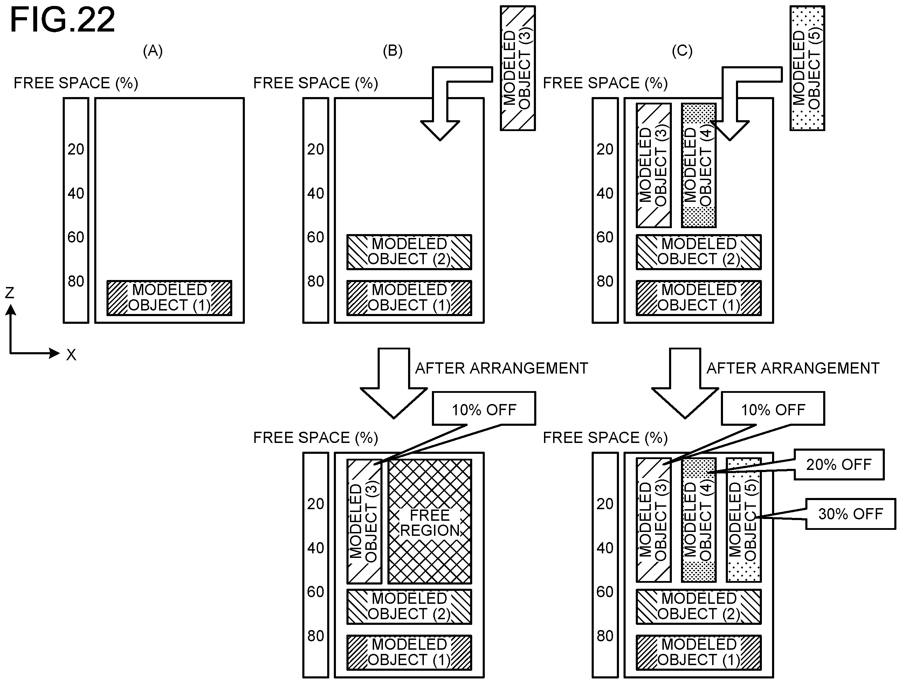

FIG. 22 is a diagram illustrating examples of a relationship between the free space in the three-dimensional printer chamber 1 and modeled objects. Meanwhile, in FIG. 22, it is assumed that the modeled objects are cuboids for the sake of simplicity, but the modeled objects are not limited to cuboids.

FIG. 22 illustrates, at (A), a state in which a modeled object (1) is arranged due to a normal offer. FIG. 22 illustrates, at (B), a state in which the modeled object (1) and a modeled object (2) are arranged due to a spot offer, and a modeled object (3) is to be arranged due to a spot offer. FIG. 22 illustrates, at (C), a state in which the modeled object (1), the modeled object (2), the modeled object (3), and a modeled object (4) are arranged due to a spot offer, and a modeled object (5) is to be arranged due to a spot offer.

As illustrated at (B) in FIG. 22, the modeled object (3) has a long side in the Z direction, so that a material corresponding to a free space is to be wasted. However, as indicated by an arranged state at (B) in FIG. 22, it is possible to reduce time and effort for preparation, clearance, and the like for modeling of the modeled object (3) as compared to individual modeling because the modeling can be performed all at once.

As indicated by an arranged state at (C) in FIG. 22, it is possible to reduce wasting of a material, time and effort, and a modeling time for modeling of the modeled object (5).

Therefore, at the time of the spot offer, the unit price calculation unit 55 of the operator terminal 32 changes a cost (in particular, reduce a unit price) in making a quotation for modeling in accordance with at least one of the following conditions: a degree of occupancy of the free space in the three-dimensional printer chamber 1 (or a degree of vacancy of a free region), remaining time before an order entry deadline, and a material available period. For example, as illustrated in FIG. 22, the unit price calculation unit 55 increases a discount rate with a decrease in the free space in the three-dimensional printer chamber 1. With this configuration, it is possible to expect an increase in applications to the spot offer.

When modeling modeled objects, it is possible to improve a material use rate, improve modeling efficiency of modeled objects at single modeling, and improve modeling efficiency by increasing applications to the spot offer. Further, quality of the material used for modeling is changed as compared to quality of a new one. Therefore, by filing the free space, it is possible to improve the material use rate per unit time, so that it is possible to largely reduce a material recycle amount.

Thereafter, the operator transmits CAD data for which the unit price is calculated by the unit price calculation unit 55 to the management server 31 (Step S21), and additionally arrange, in the three-dimensional printer chamber 1, a modeling model for which a quotation request is issued.

Subsequently, the management server 31 performs the process of updating the maximum free space in the three-dimensional printer chamber 1 on the basis of the modeling reservation data received from the operator terminal 32 (Step S22).

Then, the management server 31 receives a quotation result registration screen request from the operator terminal 32 (Step S23).

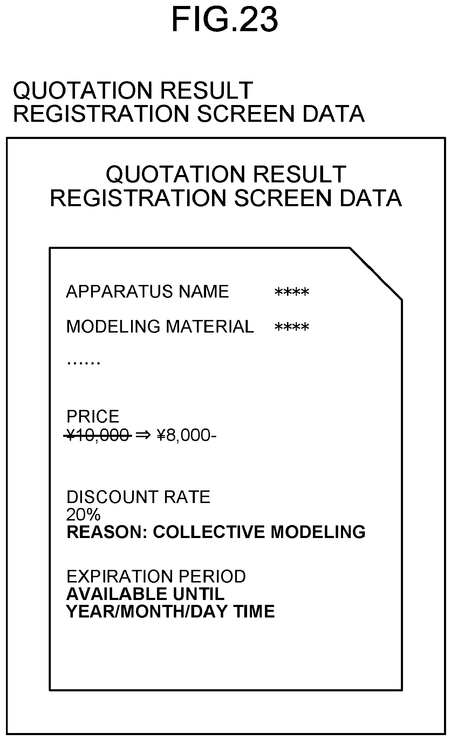

Subsequently, the management server 31 generates quotation result registration screen data in which the unit price calculated by the unit price calculation unit 55 of the operator terminal 32 is reflected and which clearly indicates that a price is discounted (Step S24-0). Here, FIG. 23 is a diagram illustrating an example of the quotation result registration screen data. As illustrated in FIG. 23, the quotation result registration screen data is configured such that, at the time of generating a quotation of an estimated price, clear indication of a discount (a discounted price and a discount rate in FIG. 23), a reason for the discount, and an expiration period of the discount can be described.

Subsequently, the management server 31 transmits the generated quotation result registration screen data to the operator terminal 32 (Step S24). The operator acquires the quotation result registration screen from the management server 31 via the operator terminal 32, and performs a process of inputting a quotation result in the quotation result registration screen (Step S25).

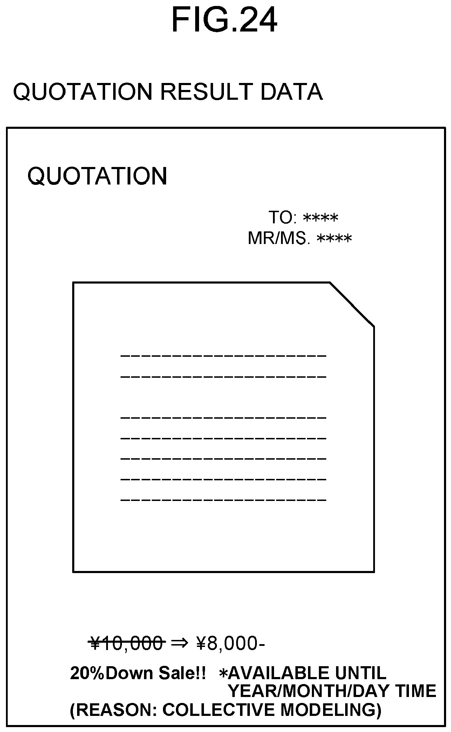

Subsequently, the quotation result data of the quotation result input by the operator is transmitted to the terminal 21 via the management server 31 (Step S26, Step S27). Here, FIG. 24 is a diagram illustrating an example of the quotation result data. As illustrated in FIG. 24, in the quotation result data, clear indication of a discount (a discounted price and a discount rate in FIG. 24), a reason for the discount, an expiration period of the discount are described in the quotation of the estimated price.

As described above, according to the present embodiment, similarly to the processes from Step S15 to Step S29 in FIG. 7, the management server 31 and the operator terminal 32 notifies a customer of the quotation result in which the cost is changed. The quotation result clearly indicates a discount, and gives a notice of a reason for the discount or the like. The user checks the quotation result via the terminal 21, and enters an order for modeling of the modeled object corresponding to the spot offer when accepting the quotation result.

### Third Embodiment

A third embodiment will be described below.

The third embodiment is different from the first embodiment and the second embodiment in that the spot offer process is received during the modeling process. In the description of the third embodiment below, explanation of the same components as those of the first embodiment and the second embodiment will be omitted, and differences form the first embodiment and the second embodiment will be described.

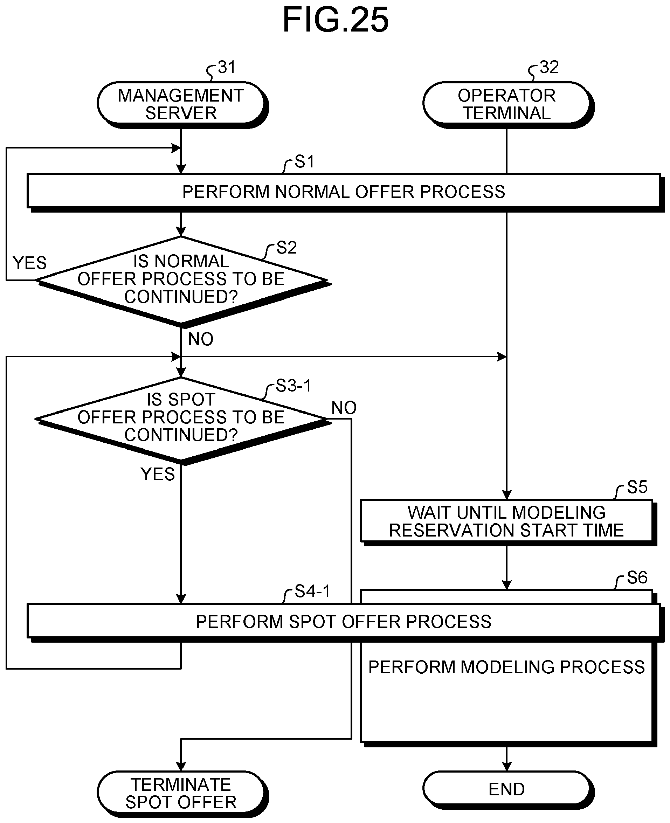

FIG. 25 is a flowchart illustrating system operation for modeling a modeled object for which an order is entered by a customer in a management system according to the third embodiment. The flowchart in FIG. 25 indicates the system operation corresponding to a single modeling reservation. In general, a plurality of modeling reservations are made. Therefore, in reality, the operation illustrated in the flowchart in FIG. 25 is performed in parallel for all of the modeling reservations.

Steps S1 and S2 in FIG. 25 are the same as Steps S1 and S2 in FIG. 6A, and therefore, explanation thereof will be omitted.

If the management server 31 continues the normal offer process (YES at Step S2), the process goes to Step S3.

Further, if the management server 31 does not continue the normal offer process (NO at Step S2), the management server 31 determines that the normal offer process is to be terminated and gives a normal offer process termination notice to the operator terminal 32.

Subsequently, at Step S3-1, the management server 31 determines whether to perform the "spot offer process", which is an offer with a limitation on the modeling size, the modeling material, and the like, or continue to perform the spot offer, on the basis of the condition A below.

The condition A is that a free region for a target modeling reservation in the three-dimensional printer chamber 1 is equal to or larger than a defined value X.

In the present embodiment, it is assumed that the management server 31 automatically determines whether to continue the spot offer process on the basis of the condition A. However, this is one example, and an operator of a provider of the three-dimensional printer output service may determine whether to perform or continue the spot offer process, may give a notice to the management server 31, and may cause the management server 31 to perform perform or continue the spot offer process.

If the management server 31 continues the spot offer process (YES at Step S3-1), the process goes to Step S4-1. In contrast, if the management server 31 does not continue the spot offer process (NO at Step S3-1), the spot offer process is terminated.

Subsequently, at Step S4-1, the management server 31 performs the "spot offer process" with a limitation on the modeling size, the modeling material, an order entry time, and the like for the customer. At Step S4-1, the operator terminal 32 receives a quotation request from the customer, and makes a reservation for arrangement of a modeling model in the three-dimensional printer chamber 1 of the three-dimensional printer 33. By performing the spot offer process as described above, it is possible to receive a modeling reservation for a modeled object that can fill the free space in the three-dimensional printer chamber 1.

In contrast, at Step S5, the operator terminal 32 waits until a current time reaches a modeling reservation start time. At Step S6, the operator terminal 32 causes, the three-dimensional printer 33 to stat to perform modeling of the modeled object when the current time reaches the modeling reservation start time, and manages operation progress of the three-dimensional printer 33.

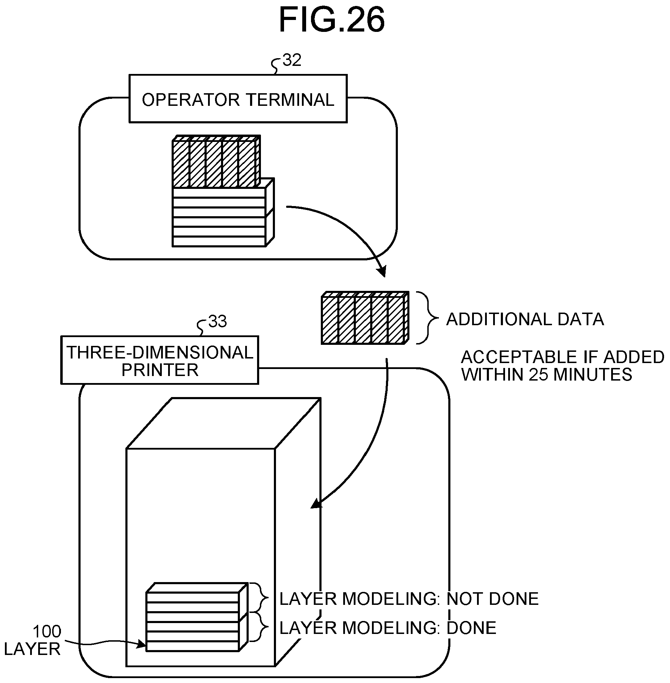

Here, FIG. 26 is a diagram illustrating how to manage the operation progress of the three-dimensional printer 33. In FIG. 26, a case is illustrated in which the number of progress layers is used as one example of management of the operation progress.

The operator terminal 32 that manages the progress layers of the three-dimensional printer 33 calculates a time during which spot modeling is to be added, on the basis of a modeling margin and a thickness of a modeling layer, which are set or input in the operator terminal 32, and a velocity per layer. In the example illustrated in FIG. 26, assuming that a layer thickness is 0.1 millimeter (mm), next modeling margin is 30 mm, and a modeling velocity is 5 seconds per layer in a modeling area of a powder bed system, a layer modeling margin area corresponds to 300 layers, so that a time during which spot modeling is to be added is 1500 second (about 25 minutes). Here, a modeling time increases with an increase in precision of the modeled object, so that a time for the spot offer is increased.

Meanwhile, in reality, various overhead times are needed, but are not taken into account in this example for the sake of simplicity. Further, it may be possible to perform calculations by using at least one of layer modeling deposition, a cubic volume of a modeled object, a minimum driving time in the modeling area, the number of repetitions of a head, and a progress rate as a management item for managing the operation progress.

Furthermore, upon receiving an order for the spot offer process, the management server 31 performs the spot offer process for the operator terminal 32.

Subsequently, the operator terminal 32 proceeds to Step S6, and accepts the spot offer process during the modeling process (Step S4-1). The operator terminal 32 sets a modeling time (modeling start time) illustrated in FIG. 10, on the basis of a degree of modeling progress in the modeling process as described above (Step S6). The modeling time (modeling start time) serves as an order deadline in the spot offer performed by the management server 31. Accordingly, the entire process in the flowchart in FIG. 25 is completed.

### Modeling process

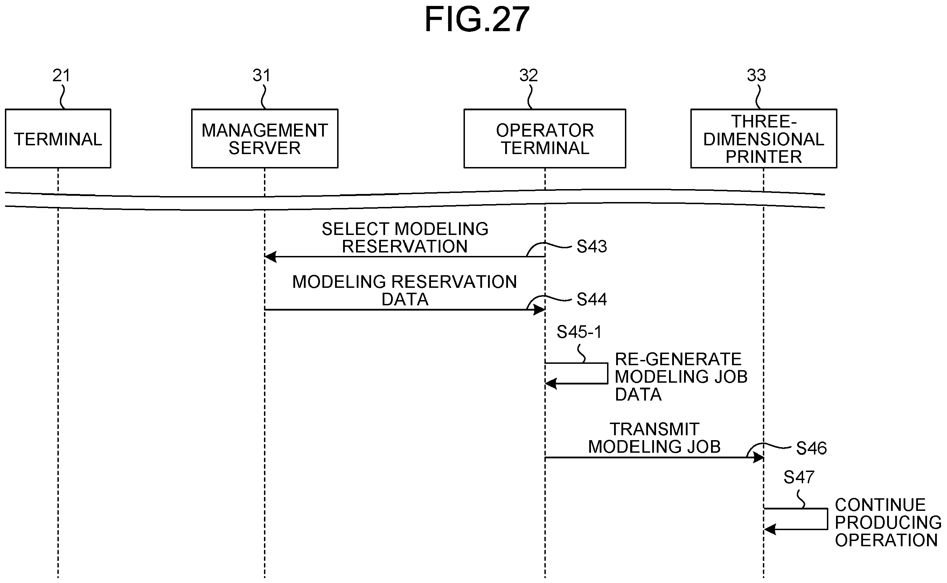

FIG. 27 is a sequence diagram of the modeling process at Step S6 in the flowchart in FIG. 25. In FIG. 27, the operator terminal 32 monitors a modeling reservation for each of the three-dimensional printers 33, on the basis of a three-dimensional printer reservation screen acquired from the management server 31 at Step S41 and Step S42. Then, the operator terminal 32 acquires, from the management server 31, modeling reservation data corresponding to the modeling reservation for which the modeling start time has come (Step S43 and Step S44).

The operator terminal 32 re-generates a modeling job to be executed by the three-dimensional printer 33, on the basis of the CAD data or the like that is included in the modeling reservation data acquired from the management server 31 (Step S45-1), and transmits the modeling job to the three-dimensional printer 33 (Step S46). Accordingly, the three-dimensional printer 33 performs modeling of the modeled object (Step S47).

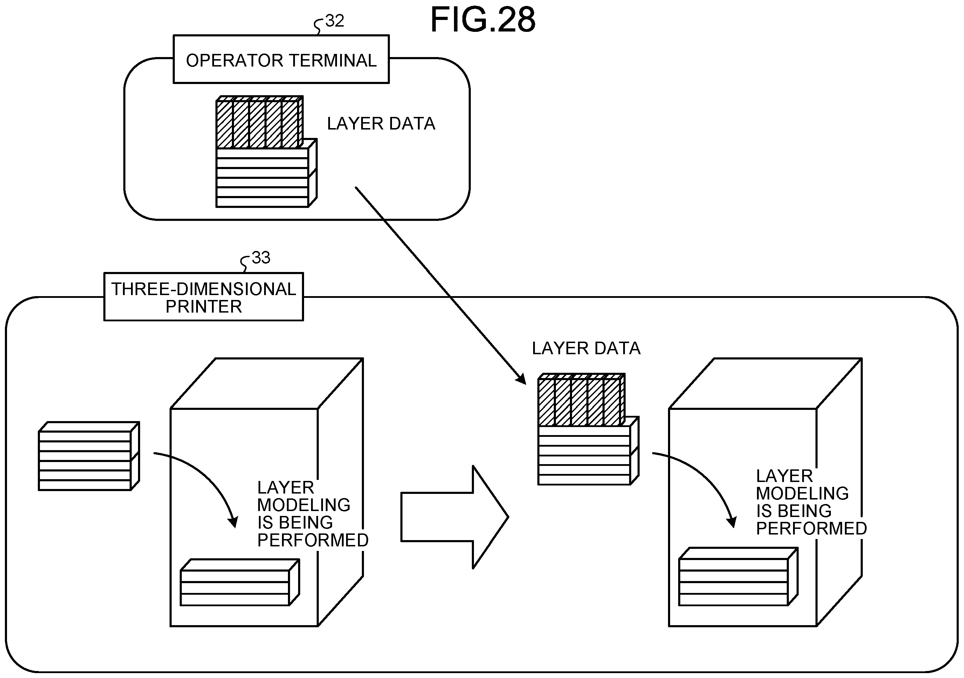

FIG. 28 is a diagram illustrating an example of modeling of a modeled object by the three-dimensional printer 33. As illustrated in FIG. 28, if a content of the re-generated modeling job is layer data, the three-dimensional printer 33 continues modeling from the re-generated layer.

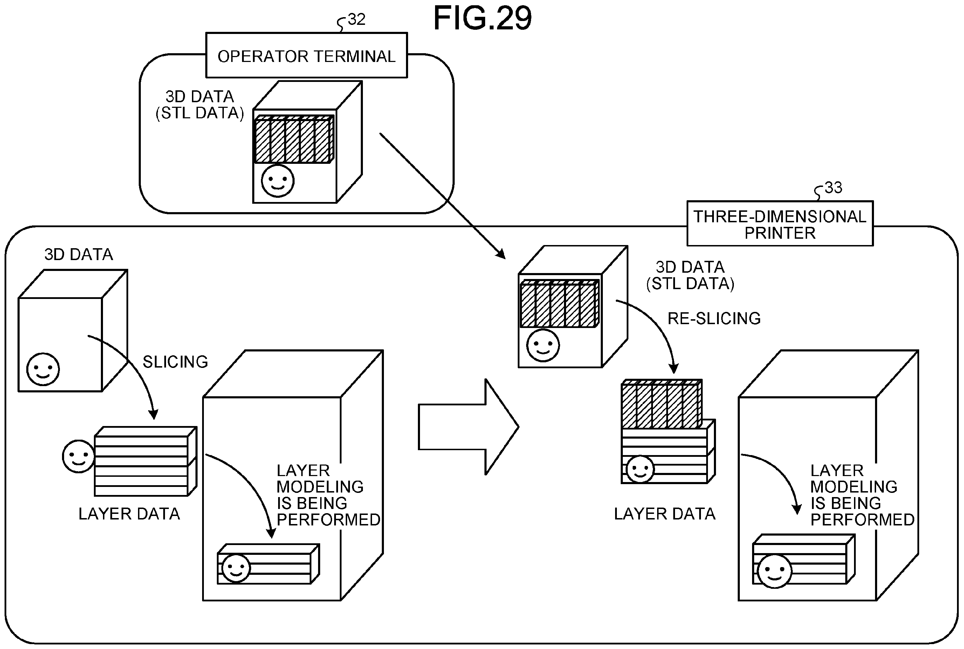

FIG. 29 is a diagram illustrating an example of modeling of a modeled object by the three-dimensional printer 33. As illustrated in FIG. 29, if a content of the re-generated modeling job is STL data or the like, which is a standard modeling design format for data of a three-dimensional shape, the three-dimensional printer 33 converts the STL data to layer data by slicing, and continues modeling from the re-generated layer.

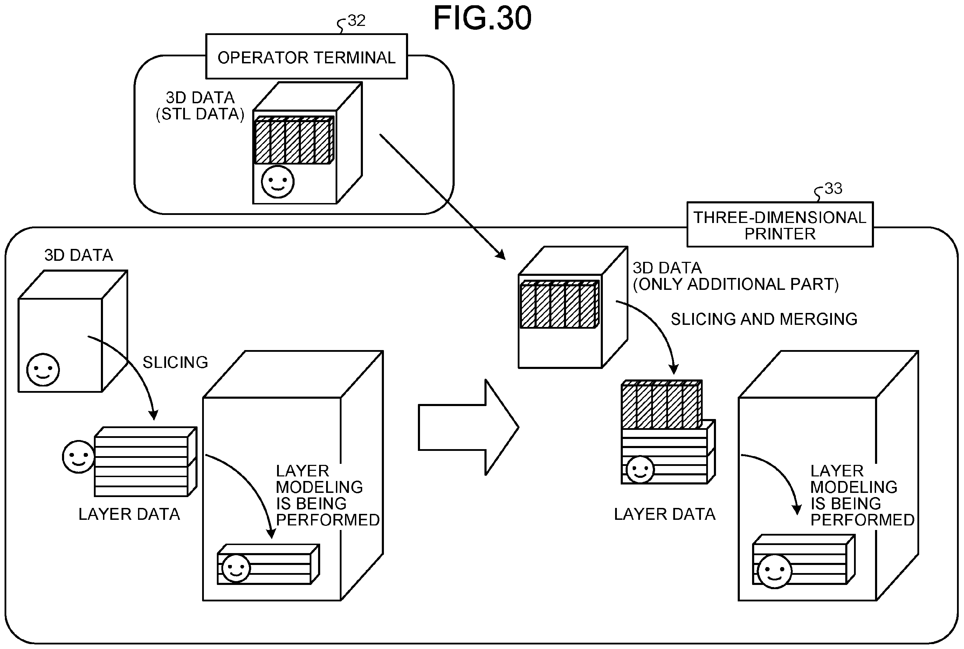

FIG. 30 is a diagram illustrating an example of modeling of a modeled object by the three-dimensional printer 33. As illustrated in FIG. 30, even if a content of the re-generated modeling job is the STL data or the like, the three-dimensional printer 33 may perform synthesize the data to the already modeled layer by only performing slicing and merging based on difference data and positional information corresponding to the additional spot offer.

Lastly, the embodiments as described above are described by way of example, and not intended to limit the scope of the invention. The novel embodiments described herein may be embodied in various other forms, and various omissions, replacements, and changes may be made without departing from the spirit of the inventions.

For example, a material used by the single three-dimensional printer 33 may be a single type or a plurality of types. Furthermore, the material may be a liquid, powder, a mixture of a liquid and powder, or the like.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

Further, any of the above-described apparatus, devices or units can be implemented as a hardware apparatus, such as a special-purpose circuit or device, or as a hardware/software combination, such as a processor executing a software program.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc.

Alternatively, any one of the above-described and other methods of the present invention may be implemented by an application specific integrated circuit (ASIC), a digital signal processor (DSP) or a field programmable gate array (FPGA), prepared by interconnecting an appropriate network of conventional component circuits or by a combination thereof with one or more conventional general purpose microprocessors or signal processors programmed accordingly.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

## Claims

1. A management system in which at least a three-dimensional printer configured to model a modeled object and a terminal configured to issue a request for modeling of a modeled object are connected, the management system comprising:
a free space detection unit configured to detect a free space in a three-dimensional printer chamber, based on a reservation for modeling of a modeled object; and
a transmission unit configured to transmit, to the terminal, an offer for modeling of a modeled object capable of being modeled in the free space in the three-dimensional printer chamber.

2. The management system according to claim 1, wherein a predetermined modeling condition is limited in the offer.

3. The management system according to claim 2, wherein the offer and a normal offer in which the predetermined modeling condition is not limited are switched.

4. The management system according to claim 3 wherein the offer is switched based on a free space in the three-dimensional printer chamber and a remaining time before a reserved modeling start time.

5. The management system according to any one of claims 1 to 4, wherein the offer includes a modeling start time, a reservation deadline, and a modeling material.

6. The management system according to any one of claims 1 to 5, wherein the terminal is configured to output a status of a reservation for a three-dimensional printer and a free space in the three-dimensional printer chamber.

7. The management system according to any one of claims 1 to 6, wherein a unit price is changed based on at least one of a degree of occupancy of a free space in the three-dimensional printer chamber, a remaining time before an order entry deadline, and a material available period.

8. The management system according to claim 7, wherein a quotation in which clear indication of a discount and an expiration period of the discount are described.

9. The management system according to any one of claims 1 to 8, wherein
the three-dimensional printer comprises a single three-dimensional printer, the terminal comprises a plurality of terminals, and the single three-dimensional printer and the plurality of terminals are connected;
the three-dimensional printer comprises a plurality of three-dimensional printers, the terminal comprises a single terminal, and the plurality of three-dimensional printers and the single terminal are connected; or
the three-dimensional printer comprises a plurality of three-dimensional printers, the terminal comprises a plurality of terminal, and the plurality of three-dimensional printers and the plurality of terminals are connected.

10. The management system according to any one of claims 1 to 9, wherein the offer is transmitted via a management apparatus.

11. A management apparatus comprising:
a free space detection unit configured to detect a free space in a three-dimensional printer chamber in a three-dimensional printer, based on a reservation for modeling of a modeled object;
an offer generation unit configured to generate an offer for modeling of a modeled object capable of being modeled in the free space in the three-dimensional printer chamber; and
a transmission unit configured to transmit the generated offer to a terminal.
